# FASCICULE DE BREVET EUROPEEN

(11) **EP 1 478 545 B1**
(45) Date de publication et mention de la délivrance du brevet: **26.04.2006**
(21) Numéro de dépôt: 03718907.3
(22) Date de dépôt: 21.02.2003
(51) Int. Cl.: B60N 2/70, A47C 7/18

(54) **MATELASSURE EN MOUSSE SOUPLE DE MELAMINE ET SES APPLICATIONS**
KISSEN AUS ELASTISCHEM MELAMINSCHAUM UND SEINE VERWENDUNGEN
FLEXIBLE FOAM PADDING MADE FROM MELAMINE AND APPLICATIONS THEREOF

(30) Priorité: 25.02.2002 FR 0202368; 28.03.2002 US 367705 P
(43) Date de publication de la demande: 24.11.2004
(73) Titulaire: J.S.O., 82350 Albias (FR)
(72) Inventeur: SAUNIERE, Jean, F-40150 Hossegor (FR); TIMBRE, Agnes, F-82300 Caussade (FR)
(74) Mandataire: Cabinet BARRE LAFORGUE & associés
(86) Numéro de dépôt international: PCT/FR2003/000578
(87) Numéro de publication internationale: WO 2003/072391

(56) Documents cités:
- EP-A- 0 121 049
- EP-A- 0 884 340
- EP-A- 0 914 917
- EP-A- 0 984 031
- WO-A-85/03420
- DE-A- 10 027 566
- GB-A- 799 647
- GB-A- 935 775

## Description

La présente invention concerne le domaine des matelassures, et des garnitures de sièges ou de lits.

Dans tout le texte, on désigne par "garniture" tout coussin ou matelas faisant partie d'un siège ou d'un lit, et adapté pour assurer le confort d'une personne, dite occupant, reposant sur une garniture, directement ou indirectement (par exemple par l'intermédiaire d'une housse amovible rapportée sur la garniture) ; une garniture comprend essentiellement une matelassure interne souple déterminant ses propriétés de portance, de résilience, de souplesse ou de dureté, de durabilité, de confort, le plus souvent recouverte ou enveloppée par une housse souple de protection et/ou de décor. Parfois, la garniture comprend aussi un élément de structure rigide tel qu'une plaque recevant la matelassure.

Dans le domaine de la confection des matelassures pour garnitures de sièges ou de lits, on utilise classiquement des mousses de rembourrage souples et élastiques. Parmi les matériaux les plus utilisés et les plus appréciés actuellement, on peut citer les mousses souples de polyuréthanne à cellules ouvertes qui se déclinent en une multitude de variétés. Certaines, par leurs propriétés mécaniques, ont su jusqu'à présent répondre correctement aux critères de confort habituel.

De manière générale, les mousses souples de polyuréthanne particulièrement adaptées pour une telle utilisation présentent une densité comprise généralement entre 18 et 70 kg.m⁻³, une portance ou résistance à la compression de 0,9 à 8 kPa (pour une compression de 40 %) et une résilience située entre 15 et 25 %. Habituellement, ces trois paramètres (densité, portance et résilience) sont considérés comme définissant le niveau de confort d'une mousse. Toutefois, les degrés de portance et de résilience sont plus ou moins liés à la densité.

La densité d'une mousse définit la proportion de matière solide et d'air. Or, en particulier, les possibilités de circulation de l'air au sein d'une mousse à cellules ouvertes influencent directement le confort. Plus il y a d'air, moins il y a de matière et plus la circulation et la ventilation sont facilitées.

La notion de portance pour des raisons ergonomiques et de confort est un facteur tout aussi important. Plus la force nécessaire pour comprimer la mousse est importante, plus la mousse est dite "portante". La portance est également liée à la densité. Moins il y a de matière, moins il y a de portance. Toutefois, pour une densité donnée il existe une plage de portance possible.

Une troisième notion importante pour le confort esf l'élasticité. L'élasticité se traduit par des mesures de résilience et de rémanence. L'élasticité est également importante pour l'esthétique et la tenue dans le temps des matelassures. En effet, la structure à cellules ouvertes des mousses de polyuréthanne a tendance, au cours du temps, à conserver la déformation qu'elle subit régulièrement, et à ne plus revenir à sa forme initiale par affaissement et/ou perte de hauteur et de portance. Les matériaux à cellules ouvertes subissent ainsi un processus de fatigue qui conduit à réduire petit à petit leurs propriétés élastiques jusqu'à créer des points durs au niveau des creux. Plus la densité d'une mousse est faible, plus sa vitesse de vieillissement est accentuée.

La densité apparaît donc comme un paramètre essentiel à prendre en compte dans le choix d'un matériau de rembourrage. Jusqu'à présent, il est de coutume de considérer que la réalisation de matelassures nécessite l'emploi de mousses de densité bien supérieure à 20 kg.m⁻³. En dessous de cette valeur, les mousses sont considérées comme inaptes pour cette application. De plus, et ceci est très important, certaines exigences normatives concernant le comportement au feu, la toxicité, le dégagement calorifique, le dégagement de fumée, la fatigue dynamique, les contraintes vibratoires... imposent l'usage de matériaux spécifiques, en particulier, des mousses de polyuréthanne de densité variant entre 40 et 70 kg.m⁻³. Chaque domaine d'application ayant ses propres exigences, c'est le cas dans les domaines du siège automobile et surtout du siège aéronautique de transport public ou privé.

Or, pour des raisons diverses, un allègement des matelassures est souvent recherché, par exemple pour faciliter le transport et tout déplacement des articles tels que sièges ou lits, déjà souvent volumineux. On connaît des domaines industriels dans lesquels la quête de la légèreté est un objectif permanent. Tel est en particulier le cas dans le domaine des transports des personnes (construction automobile, ferroviaire, navale, et surtout aéronautique et spatiale). Dans ce domaine, tout allègement se traduit par une économie non négligeable d'énergie. Plus encore, pour un véhicule le critère de poids, au-delà d'une simple économie d'énergie, est souvent décisif, en ce sens qu'il conditionne la faisabilité du véhicule. En particulier, dans l'aéronautique et le spatial, il conditionne la capacité d'un engin à voler.

Aussi, il existe une réelle nécessité de concevoir des matelassures de densité plus faible que celles existant jusqu'à maintenant, inférieure à 20 kg.m⁻³, qui puissent toutefois conserver un niveau de confort acceptable et des performances mécaniques au moins comparables aux matelassures classiques.

On connaît d'autres mousses de rembourrage souples et élastiques pour matelassure que les mousses de polyuréthanne à cellules ouvertes, par exemple les mousses de néoprène, de silicone, de polyéthylène, de densité variable, mais toujours bien supérieure à 20 kg.m⁻³. On connaît également les matelassures en latex, de densité d'environ 65 kg.m⁻³.

On connaît aussi le document EP 0 121 049 qui décrit des plaques de renfort en mousse de mélamine incorporées dans des matelassures. Comme l'indique EP 0 121 049, ces plaques de mousse de mélamine présentent une résistance à la compression (on parle aussi de dureté à l'enfoncement) élevée, de l'ordre de 400 N. Ce ne sont donc pas des mousses de rembourrage souples et élastiques mais des plaques rigides. Dans EP 0 121 049, ces plaques de mousse de mélamine sont utilisées, non comme matériau souple de rembourrage, mais comme inserts destinés à modifier spécifiquement des propriétés particulières de la mousse de rembourrage utilisée dans la matelassure. Plus précisément, dans EP 0 121 049, ces plaques de mousse rigide de mélamine interviennent à titre de corps de renforcement rigides pour améliorer ponctuellement la portance des mousses souples de rembourrage.

Les mousses de mélamine, notamment les produits désignés par la marque BASOTECT® déposée au nom de la société BASF, Allemagne, et les mousses obtenues selon le procédé de fabrication décrit dans US 4 666 948, sont des matériaux duromères à cellules ouvertes, de très faible densité, appartenant au groupe des aminoplastes. Elles se caractérisent par la réunion de multiples propriétés : bonnes qualités d'isolations acoustique et thermique, comportement au feu offrant une bonne sécurité, haute stabilité thermique, bonne résistance chimique aux solvants et agents agressifs, excellente stabilité dimensionnelle, même en cas de vibrations permanentes. Ces différentes performances expliquent l'intérêt consacré aux mousses souples de mélamine, notamment dans le domaine du bâtiment, mais également dans les domaines des hautes technologies, comme la construction automobile, ferroviaire, aéronautique... mais exclusivement pour les applications d'absorption acoustique et d'isolation thermique.

Ces mousses de mélamine se caractérisent aussi par une forte résistance en compression et une très grande fragilité en déchirement et à l'abrasion, et sont de ce fait inappropriées pour la fabrication des matelassures.

La présente invention vise à proposer des matelassures qui tout en présentant des propriétés mécaniques et physiques -notamment un confort- comparables à celles des matelassures antérieures, s'en distinguent par un poids beaucoup plus faible.

A cet effet, l'invention a pour principal objectif de proposer une matelassure aux propriétés mécaniques et physiques adaptées pour procurer un confort au moins équivalent à celui des matelassures à mousse de polyuréthanne à cellules ouvertes traditionnelle, tout en étant de densité nettement inférieure.

En particulier, l'invention vise à proposer une matelassure de grande légèreté et présentant une bonne tenue dans le temps, tant au niveau de son aspect esthétique que de ces propriétés mécaniques, c'est-à-dire une matelassure capable de conserver. à long terme, la dureté et l'élasticité initialement fixées par le fabriquant, sans perte notable ni de sa hauteur ni de sa portance.

A cet effet, la présente invention concerne une matelassure, caractérisée en ce qu'elle comprend au moins une portion de mousse formée d'une mousse de mélamine de dureté, mesurée en indentation selon la norme ISO 2439 B, inférieure à 300 N pour un enfoncement de 40 %, et dite mousse souple de mélamine.

Dans tout le texte, les mesures d'indentation font référence à des mesures effectuées conformément à la norme ISO 2439 B.

Avantageusement et selon l'invention, ladite mousse souple de mélamine est une mousse souple de mélamine de dureté stabilisée à moins de 300 N pour un enfoncement de 40 % en indentation, dite mousse souple de mélamine stabilisée.

On entend par mousse de dureté stabilisée à moins de 300 N pour un enfoncement de 40 % en indentation, une mousse présentant, à ce niveau d'enfoncement, une dureté de valeur inférieure à 300 N et sensiblement constante -notamment à 25 % près, après 80 000 cycles d'un processus de fatigue dynamique conforme à la norme ISO 3385- au cours du temps et, en particulier, au cours d'un processus de fatigue dynamique correspondant à son utilisation ultérieure.

Avantageusement et selon l'invention, ladite mousse souple de mélamine -notamment stabilisée- présente une dureté de l'ordre de 160 à 200 N pour un enfoncement de 40 % en indentation, notamment de l'ordre de 180 N.

Avantageusement et selon l'invention, au moins 50 % -typiquement de l'ordre de 60 à 70 %- du volume de la matelassure est formé d'au moins une portion de mousse souple de mélamine -notamment stabilisée-. Ainsi, la(les) portion(s) de mousse souple de mélamine -notamment stabilisée- fait(font) office de mousse de rembourrage souple et élastique et constituent la principale partie de la matelassure lui conférant ses propriétés de confort. En tout état de cause, au moins l'âme d'une matelassure selon l'invention est réalisée en mousse souple de mélamine -notamment stabilisée-.

La présente invention repose sur la constatation surprenante que les mousses de mélamine traditionnelles qui, de par leur forte résistance en compression et leur grande fragilité au déchirement, étaient considérées comme inappropriées pour la fabrication des matelassures, pouvaient toutefois donner lieu à un matériau aux propriétés mécaniques de confort et de stabilité mécanique extrêmement avantageuses pour cette application particulière, à condition de subir, au préalable, un processus de ramollissement et/ou de stabilisation, notamment par préfatigue dynamique. Ce processus de préfatigue consiste à soumettre un matériau de dureté à l'enfoncement relativement élevée, à des compressions successives jusqu'à obtenir un matériau plus mou et d'élasticité améliorée. Un tel processus de préfatigue appliqué sur une mousse de mélamine permet de générer une mousse souple de mélamine, éventuellement stabilisée, de dureté inférieure à 300 N pour un enfoncement de 40% en indentation, comme précédemment évoquée.

Par ailleurs, des analyses des propriétés d'indentation, de résistance à la compression, de déformation rémanente, de résilience, des analyses du confort du comportement à la fatigue... qui jusqu'alors n'avaient jamais été effectuées sur des mousses de mélamine ont permis de confirmer que les mousses souples de mélamine -notamment stabilisée- selon l'invention conviennent parfaitement à la réalisation des matelassures. En particulier, des mesures de confort ont permis de montrer qu'une mousse souple de mélamine -notamment stabilisée- selon l'invention, présente avantageusement un facteur d'indentation, selon la norme ISO 2439 B, bien supérieur à 2,7 -notamment de l'ordre de 5 à 7-.

En l'espèce, les inventeurs ont pu établir qu'un bloc de mousse de mélamine, par exemple en BASOTECT® , commercialisé par la société BASF, Allemagne, ayant subi une vingtaine de cycles de compression-décompression, à un taux de compression de l'ordre de 70 % d'enfoncement, présente non seulement une souplesse (dureté à l'enfoncement inférieure à 300 N) et une élasticité comparables à celles d'une mousse souple de rembourrage classique, mais également une stabilité mécanique fortement améliorée, voire supérieure à celle de certaines mousses de polyuréthanne.

Une telle mousse souple de mélamine -notamment stabilisée- convient tout particulièrement à une utilisation comme mousse souple de rembourrage pour matelassures. Outre une légèreté et un confort au moins comparables à ceux procurés par une mousse de polyuréthanne à cellules ouvertes, une matelassure selon l'invention, comprenant une telle mousse souple de mélamine à titre de matériau de rembourrage souple, assure avantageusement une grande résistance au temps et à l'usure, en particulier, une résistance à l'affaissement (perte progressive de hauteur et de portance, au cours du temps et des utilisations).

Il est à noter que EP 0 984 031 décrit des articles moulés formés d'un feuillet, obtenu en imprégnant un matériau poreux d'une résine thermoplastique ou thermodurcissable, et d'une base en un matériau synthétique. A titre de matériau synthétique, EP 0 984 031 cite toutes les grandes familles de matériaux synthétiques : plastiques expansés, agglomérés de bois ou de fibres, feuilles plastiques, feutrines, non-tissés ayant un faible point d'ébullition, verre, laine, amiante, et matériaux similaires. Dans une forme de réalisation particulière, EP 0 984 031 désigne comme plastique expansé : les polyéthylène et polypropylène expansés, et les matériaux similaires, le chlorure de polyvinyle, le polystyrène, les mousses de résine de mélamine, les mousses de résine d'urée, les mousses de résine phénol, et les matériaux similaires. Parmi les applications diverses et variées de ces articles moulés, EP 0 984 031 évoque, entre autres, la fabrication des panneaux muraux, des alaises, et des produits similaires, des coussins de sièges, de sofas, et d'articles similaires, des matériaux d'intérieur et matériaux similaires. EP 0 984 031 n'enseigne, en aucun cas, ni une matelassure en mousse de mélamine, ni une mousse aux propriétés mécaniques et physiques comparables à celles d'une mousse souple de mélamine -notamment stabilisée-, c'est-à-dire ayant subi une préfatigue dynamique telle que précédemment indiquée.

Avantageusement et selon l'invention, la densité de la mousse souple de mélamine -notamment stabilisée- est inférieure à 20 kg.m⁻³, et préférentiellement située entre 8 et 12 kg.m⁻³.

Avantageusement et selon l'invention, chaque portion réalisée en mousse souple de mélamine -notamment stabilisée- est au moins en partie protégée par un matériau adapté pour présenter une résistance au déchirement supérieure à celle de la mousse souple de mélamine.

Avantageusement et selon l'invention, au moins une couche constitutive de ladite matelassure est réalisée en une mousse souple de mélamine -notamment stabilisée-.

Avantageusement, une matelassure selon l'invention comprend au moins deux couches distinctes superposées et assemblées, dont au moins une couche, dite couche de matériau distinct, est réalisée en un matériau autre qu'une mousse souple de mélamine.

Avantageusement et selon l'invention, la(les) couche(s) réalisée(s) en mousse souple de mélamine -notamment stabilisée- représente(nt) au moins 50 % de l'épaisseur d'une matelassure selon l'invention, typiquement de l'ordre de 60 à 70 %.

Avantageusement, une couche de matériau distinct selon l'invention présente une densité supérieure à 20 kg.m⁻³.

Avantageusement et selon l'invention, au moins une des couches d'une matelassure selon l'invention présente un alvéolage, sur au moins une partie d'une des faces de ladite couche. Outre la gradation de la dureté de la couche de mousse, cette caractéristique de l'invention permet une possibilité d'allègement complémentaire de la matelassure.

Avantageusement une matelassure selon l'invention comprend au moins une couche de matériau distinct, dite couche de confort, s'étendant sur une couche de mousse souple de mélamine -notamment stabilisée- du côté de l'occupant. Cette couche de confort peut être une mousse de polyuréthanne et/ou un matériau viscoélastique ou tout autre matériau approprié.

Avantageusement et selon l'invention, la matelassure comprend une couche de mousse de matériau distinct, dite couche sous-jacente, s'étendant du côté de la couche de mousse souple de mélamine -notamment stabilisée- opposée à l'occupant, destinée à ajuster la portance globale de la matelassure.

Les différentes couches composant une garniture selon l'invention peuvent être assemblées par différentes techniques dépendant des matériaux utilisés, comme par exemple, collage ou thermosoudage, des techniques bien connues de l'homme du métier. Bien entendu, tout autre procédé permettant d'obtenir une liaison durable entre les couches peut être employé.

Les couches de matériaux formant une matelassure selon l'invention peuvent présenter différentes épaisseurs et différentes densités. Les épaisseurs et les densités respectives de chacune des couches de matelassures sont choisies en fonction des propriétés recherchées de la matelassure, et en particulier sa portance et son élasticité globales. Il en est de même de la forme et des dimensions des protubérances qui définissent un alvéolage (couche de mousse souple de mélamine et/ou couche(s) de matériau distinct).

Avantageusement et selon l'invention, au moins un insert s'étendant sur au moins une partie de l'épaisseur de la matelassure, en un endroit particulier, destiné à modifier ponctuellement les caractéristiques mécaniques. Un tel insert peut être par exemple une mousse de polyuréthanne déformable en flexion et torsion, capable de se déformer élastiquement pour mieux répartir les efforts. Un tel insert peut aussi être une mousse viscoélastique ou une vésicule de fluide ou tout autre matériau capable d'amortir les énergies de vibrations et de chocs, par exemple pour soulager certains points sensibles du corps entrant en contact avec la surface de la garniture.

Avantageusement et selon l'invention, la matelassure présente un revêtement superficiel (formant au moins en partie une surface de ladite matelassure).

Avantageusement et selon l'invention, le revêtement superficiel est choisi parmi : un textile, du cuire, tout autre revêtement décor.

Avantageusement et selon l'invention, le revêtement superficiel est ignifugé.

L'invention permet ainsi d'obtenir une matelassure qui, outre des qualités de portance, d'élasticité... souhaitées et adaptées à son utilisation, présente un poids très faible par rapport à une matelassure traditionnelle. Aussi, une matelassure selon l'invention peut être avantageusement utilisée pour la réalisation de garnitures de sièges ou de lits de faible poids.

Ainsi, l'invention concerne une garniture caractérisée en ce qu'elle comprend au moins une matelassure selon l'invention couverte au moins en partie d'une housse souple de protection et/ou de décor.

De telles garnitures selon l'invention interviennent avantageusement dans la réalisation de sièges ou de lits où elles permettent de diminuer considérablement le poids global de ces articles par rapport à des articles similaires antérieurs. Des sièges allégés grâce notamment à une garniture selon l'invention peuvent, avantageusement et judicieusement, intervenir dans la construction automobile, ferroviaire, aéronautique et spatiale où toute réduction en poids représente un enjeu considérable.

L'invention concerne un siège -notamment pour véhicule de transport- présentant au moins une partie constitutive (par exemple, une assise, un dossier, un appui-tête, un repose-jambe...) comprenant au moins une matelassure selon l'invention. L'invention s'étend ainsi à un siège caractérisé en ce qu'il comprend au moins une matelassure selon l'invention.

L'invention concerne également un siège caractérisé en ce qu'il comprend au moins une garniture selon l'invention.

Avantageusement, un siège selon l'invention est un siège de véhicule de transport choisi parmi : voiture, car, bus, train, métro, tramway, aéronef, bateau...

De manière générale, l'invention s'étend à l'utilisation d'une mousse souple de mélamine -notamment stabilisée- de dureté inférieure à 300 N pour un enfoncement de 40 % en indentation, notamment de l'ordre de 160 à 200 N, et de préférence de l'ordre de 180 N, à titre de mousse souple de rembourrage destinée à entrer dans la composition d'une matelassure.

Une mousse souple de mélamine -notamment stabilisée- utilisée selon l'invention présente avantageusement une densité inférieure à 20 kg.m⁻³, préférentiellement située entre 8 et 12 kg.m⁻³.

Avantageusement et selon l'invention, cette utilisation représente au moins 50 % en volume de ladite matelassure.

L'invention concerne aussi une matelassure, un coussin, un siège et une utilisation d'une mousse souple de mélainine -notamment stabilisée- de dureté inférieure à 300 N pour un enfoncement de 40 % en indentation, à titre de mousse souple de rembourrage destinée à entrer dans la composition d'une matelassure, caractérisés, en combinaison, par tout ou partie des caractéristiques ci-dessus ou ci-après.

D'autres buts, caractéristiques et avantages de l'invention apparaîtront à la lecture des exemples suivants qui se réfèrent aux figures annexées, dans lesquelles :
- la figure 1 est une vue schématique en perspective d'ensemble d'un siège passager d'avion de ligne, muni d'une assise, d'un dossier, d'un appui-tête et de deux accoudoirs qui sont équipés d'une matelassure et d'une garniture selon la présente invention,
- la figure 2 est une vue schématique en perspective éclatée et arrachée d'un siège passager d'avion selon la présente invention, laissant apparaître la structure des matelassures,
- les figures 3a, 3b, 3c, 3d et 3e sont des vues schématiques en coupe par un plan vertical longitudinal représentant cinq variantes de matelassures pour garniture d'assise de sièges -notamment de siège passager d'avion de ligne-,
- les figures 4a et 4b sont des représentations graphiques de la variation de l'indentation d'une mousse de mélamine en fonction du nombre de cycles compression-décompression au cours d'un processus de préfatigue selon l'invention,
- la figure 5 est une représentation de la variation de la résistance à l'indentation à 40 % d'une mousse de mélamine soumise à un processus de préfatigue selon l'invention,
- la figure 6 est une représentation de l'évolution de la hauteur d'un bloc en mousse de mélamine soumis à un processus de préfatigue selon l'invention.

Une première étape dans la fabrication d'une matelassure selon l'invention consiste en l'obtention d'un matériau souple de rembourrage à partir d'une mousse de mélamine. De manière non limitative, il peut s'agir d'un bloc de mousse de mélamine conforme à un produit désigné par la marque BASOTECT® au nom de la société BASF, Allemagne.

Ledit bloc de mousse de mélamine est soumis à un processus de préfatigue afin de modifier certaines de ses propriétés mécaniques -notamment dureté et élasticité-.

Pour ce faire, le processus de préfatigue consiste à exercer sur le bloc de mousse de mélamine, une série de compressions interrompues par des phases de décompression à un taux de compression de 70 % d'enfoncement et à une vitesse, par exemple, de l'ordre de 500 mm.mn⁻¹.

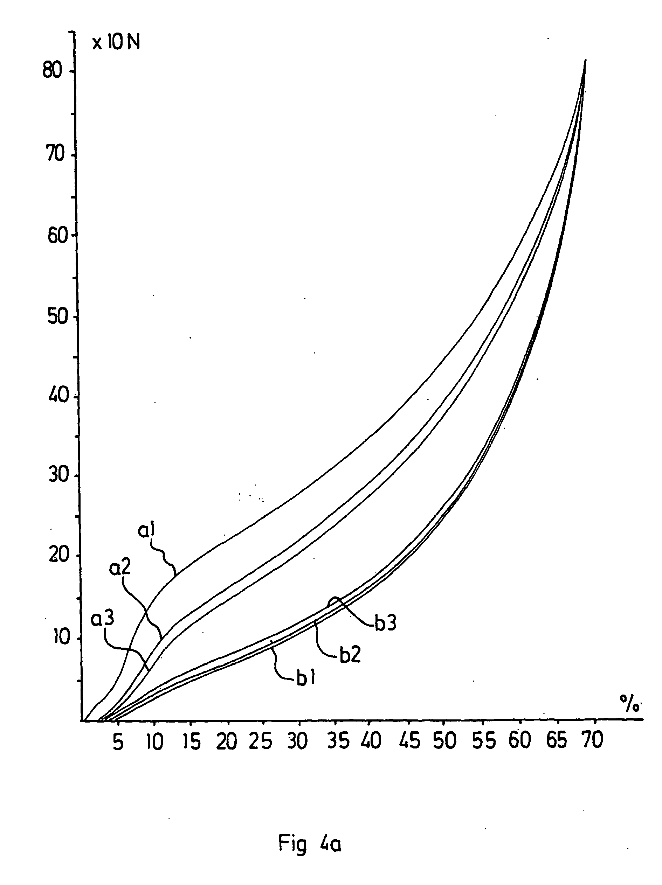

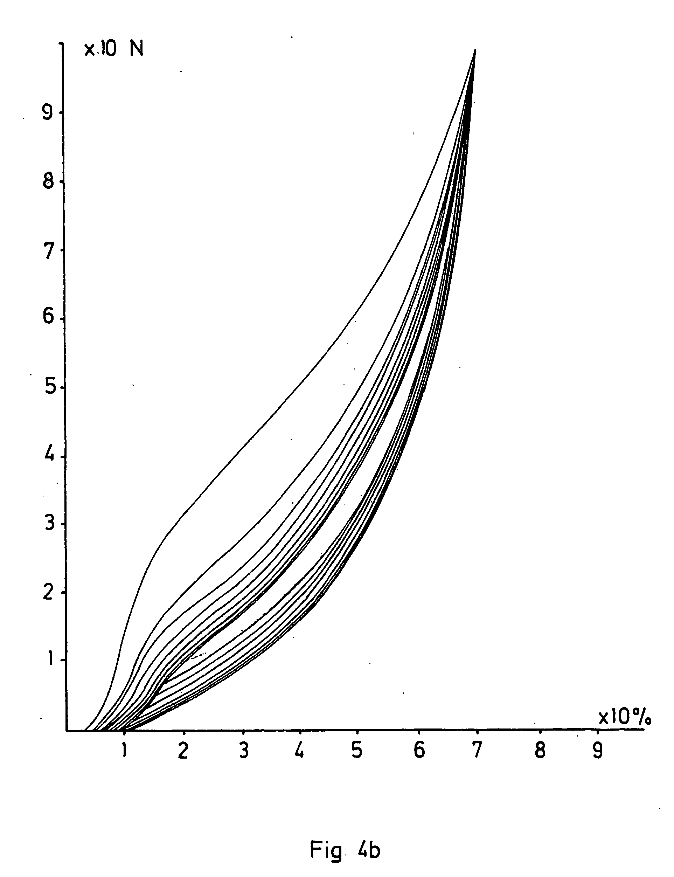

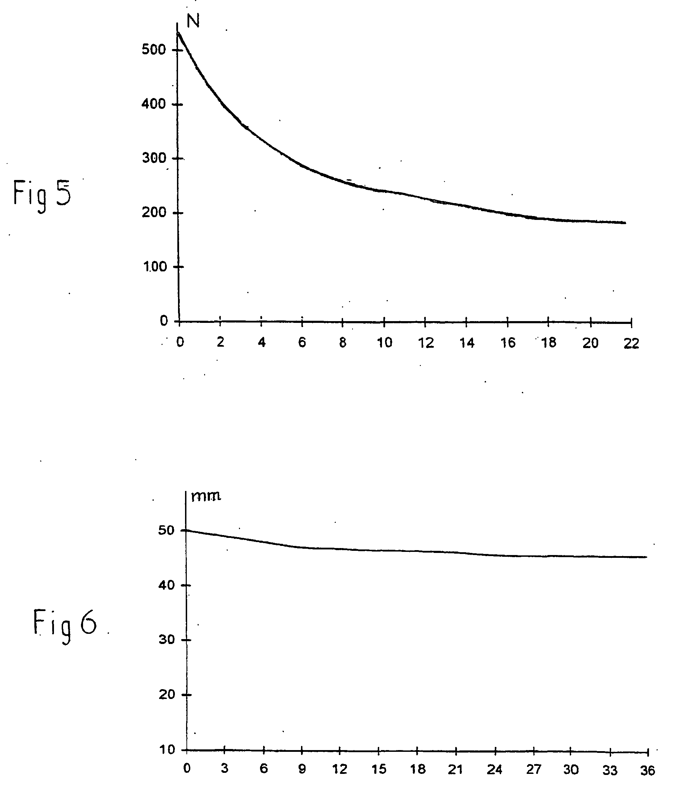

Régulièrement pendant le processus de préfatigue, des échantillons de mousse de mélamine ont été prélevés en différentes parties du bloc à transformer. Pour ces différents échantillons, le niveau de confort, la dureté à l'enfoncement et l'élasticité ont été évalués au moyen de mesures d'indentation suivant la norme ISO 2439 B, de résistance à la compression (à 25 %, 40 % et 65 % d'enfoncement) suivant la norme ISO 3386. Les résultats sont présentés sous forme graphique aux figures 4a, 4b et 5.

Les figures 4a et 4b correspondent à des relevés d'indentation d'une mousse de mélamine, de type BASOTECT® , au cours du processus de préfatigue. Sur l'axe des ordonnées est représentée la force de compression ou de décompression réactive et sur l'axe des abscisses, le taux d'enfoncement.

La figure 4a fait apparaître les relevés d'indentation de la mousse BASOTECT® telle qu'elle est commercialisée pendant les trois premiers cycles de compression-décompression. Les courbes a₁, a₂ et a₃ correspondent aux forces de compression respectivement de la mousse initiale, de la mousse au deuxième et au troisième cycles de compression-décompression. Les courbes b₁, b₂ et b₃, correspondent aux pressions réactives correspondantes.

La figure 4b fait apparaître les vingt premiers cycles de compression-décompression de la mousse BASOTECT® telle que commercialisée.

Tel que le montrent ces deux figures, dès les premières compressions, la mousse BASOTECT® , d'indentation initiale de l'ordre de 500 N pour 40 % d'enfoncement, subit un ramollissement dû à une modification cellulaire.

Le ramollissement se fait de manière progressive jusqu'à atteindre un état de souplesse de forte stabilité dès une vingtaine de cycles. Lors de cette phase dans le processus de préfatigue, la mousse de mélamine devenue souple subit une stabilisation progressive jusqu'à atteindre après environ vingt cycles de préfatigue, une stabilité élevée tant au niveau de la souplesse que de l'élasticité. La figure 5 exposant les résultats de l'analyse de résistance à l'indentation à 40 % illustre cet effet de stabilisation. Sur l'axe des ordonnées est représentée la force d'indentation à 40 % exercée, et sur l'axe des abscisses, le nombre de cycles.

Une mousse de mélamine de type BASOTECT® ayant subi un processus de préfatigue selon l'invention, avantageusement d'une vingtaine de cycles, présente alors une dureté stabilisée aux alentours de 180 N pour un enfoncement de 40 % en indentation. Cette valeur d'indentation reflète un niveau de confort élevé, équivalent voire supérieur au niveau de confort de bien des mousses de rembourrage jusqu'alors utilisées.

Une matelassure selon l'invention, utilisant une mousse de mélamine ainsi modifiée, dite mousse souple de mélamine -notamment stabilisée- présente ainsi non seulement une souplesse et un confort au moins équivalents à ceux d'une matelassure incorporant une mousse souple de rembourrage traditionnelle, mais aussi une densité significativement plus faible ainsi qu'un niveau de dureté et d'élasticité extrêmement stable, d'où une grande résistance au temps et au phénomène d'affaissement. En particulier des essais conformes à la norme ISO 3385 ont permis de montrer qu'une telle mousse souple de mélamine, stabilisée selon l'invention, subissait après 80 000 cycles à 75 daN une perte de dureté inférieure à 25 %, typiquement de l'ordre de 19,5 %.

La figure 6 permet de suivre l'évolution de la réduction de la hauteur du bloc de mousse de mélamine tout au long du processus de préfatigue. Sur l'axe des ordonnées est représentée la hauteur de l'éprouvette de mousse de mélamine, et sur l'axe des abscisses, le nombre de cycles. La figure 6 permet de constater la stabilité de la hauteur d'un bloc de mousse souple de mélamine ainsi modifié et permet aussi de définir la taille du bloc de mousse de mélamine à utiliser en vue d'obtenir exactement la hauteur de mousse souple de mélamine -notamment stabilisée- voulue au terme d'un processus de préfatigue au nombre de cycles bien défini.

Une fois la mousse de mélamine transformée, ramollie et/ou stabilisée, celle-ci peut alors être utilisée comme toute autre mousse souple de rembourrage appropriée à la confection d'une matelassure.

Bien que les exemples qui vont suivre et les figures qui leur correspondent se rapportent à des matelassures pour garniture de siège passager d'avion de ligne pour lesquelles l'invention procure des avantages particuliers et déterminants, l'invention n'est pas limitée à ces matelassures de structure particulière ni aux sièges passagers d'avion de ligne comprenant ces matelassures. Ces exemples ont pour unique vocation de proposer diverses structures envisageables de matelassures incorporant une mousse souple de mélamine - notamment stabilisée- selon l'invention.

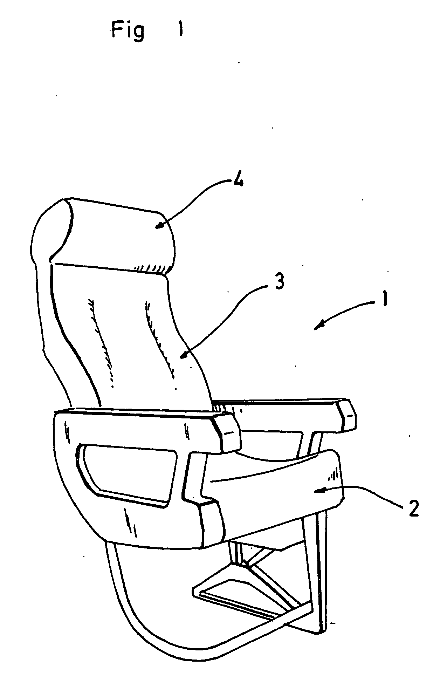

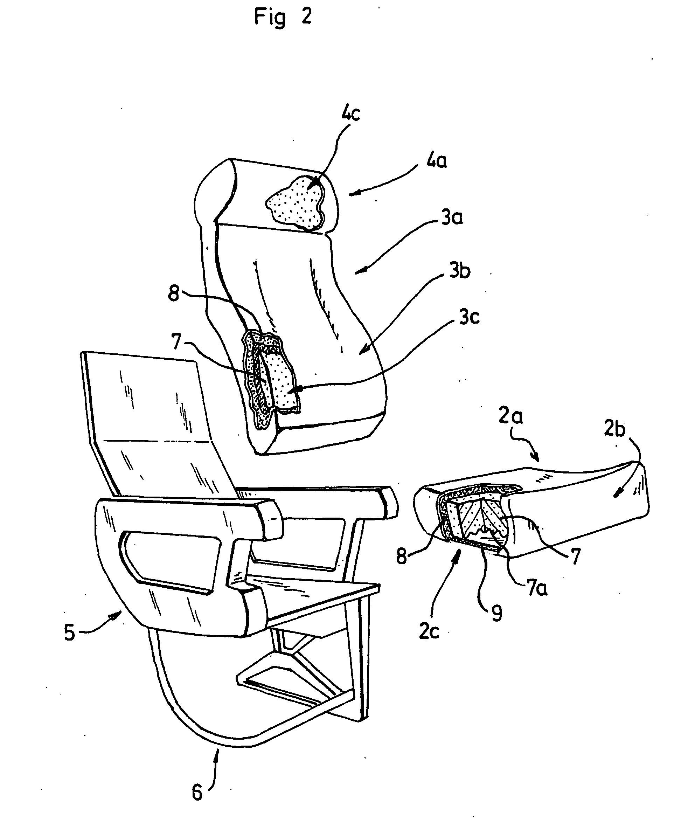

Aux figures 1 et 2 est représenté un siège passager 1 d'avion de ligne qui est constitué d'une assise 2 soutenant un dossier 3, surmonté d'un appui-tête 4, les garnitures 2a, 3a et 4a respectivement de l'assise 2, du dossier 3 et de l'appui-tête 4, reposent sur une ossature rigide 5 du siège 1.

L'ensemble du siège 1 est fixé au plancher de l'avion par les pieds 6 qui sont des prolongements de l'ossature rigide 5 du siège 1.

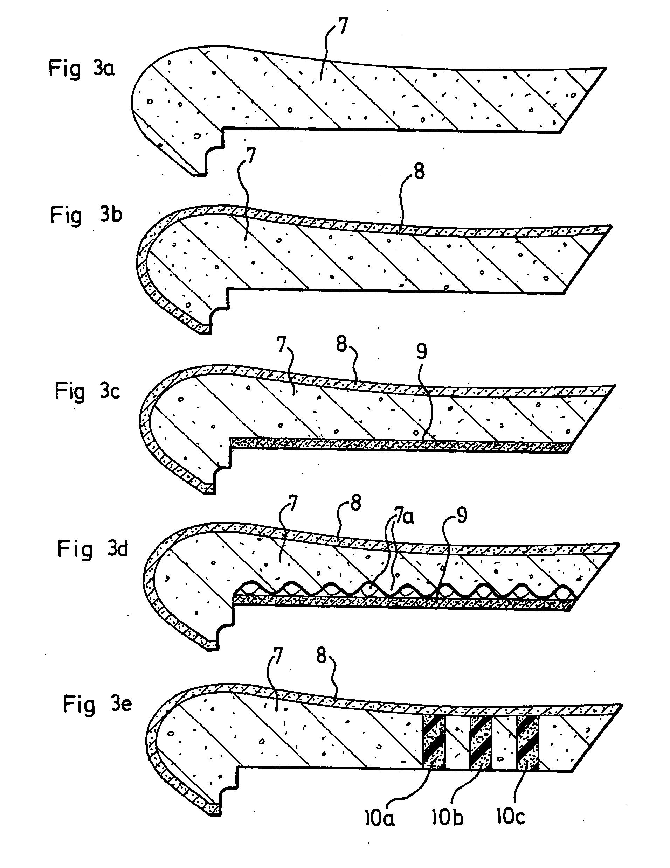

Ces garnitures 2a, 3a et 4a sont elles-mêmes constituées des matelassures 2c, 3c et 4c recouvertes par des housses souples de protection 2b, 3b et 4b. Les matelassures 2c, 3c et 4c pouvant être des monoblocs 4c de mousse souple de mélamine -notamment stabilisée- ou des assemblages 2c et 3c de matériaux de rembourrage comprenant au moins une portion de mousse souple de mélamine -notamment stabilisée- 7. Différents modes de réalisation d'une matelassure selon l'invention sont représentés de manière non limitative aux figures 3a, 3b, 3c, 3d et 3e.

Dans le premier mode de réalisation représenté à la figure 3a, la matelassure 2c est constituée d'un monobloc de mousse souple de mélamine -notamment stabilisée- 7 de forme adaptée pour une mise en place simple et rapide de la garniture 2a de l'assise 2 sur l'ossature rigide 5 du siège 1. Ce monobloc est réalisé en une mousse souple de mélamine 7, conforme au BASOTECT® commercialisé par la société BASF, Allemagne et modifié selon l'invention par un processus de préfatigue. La forme donnée à la matelassure peut être réalisée par thermoformage, thermocompression, découpe, moulage.

Dans un deuxième mode de réalisation, représenté à la figure 3b, la matelassure 2c présente une structure bicouche. La couche de mousse souple de mélamine -notamment stabilisée- 7, de forme comparable à la matelassure monobloc représentée à la figure 3a, est recouverte sur sa face supérieure d'une couche de matériau distinct 8 qui peut être une mousse de confort apte à assurer un meilleur confort à l'utilisateur. Avantageusement, il s'agit d'une mousse de faible résilience, viscoélastique et/ou polyuréthanne, adaptée pour répartir au mieux le poids de l'utilisateur atténuant ainsi les pressions locales. Pour ce faire, il est possible d'insérer au moment du moulage une découpe de mousse souple de mélamine -notamment stabilisée-, provenant d'un bloc, à l'intérieur d'une pièce moulée en polyuréthane ou de latex.

Au lieu d'être une couche de mousse de confort, la couche de matériau distinct 8 peut être un revêtement par exemple ignifugé, ou encore une couche de protection en un matériau adapté pour présenter une résistance au déchirement supérieure à celle de la mousse souple de mélamine -notamment stabilisée-.

Cette matelassure, selon une autre variante de l'invention, peut aussi présenter, comme le montre la figure 3c, une couche de mousse de matériau distinct 9 sous jacente à la couche de mousse souple de mélamine -notamment stabilisée- 7, assurant par exemple une meilleure portance à l'ensemble de sa structure sur l'ossature 5. Il s'agira alors par exemple d'une couche de mousse de polyuréthanne ou de tout autre matériau, de densité et d'épaisseur adaptées.

Dans un quatrième mode de réalisation représenté à la figure 3d, la matelassure de coussin d'assise présente une structure multicouche comparable à la matelassure de la figure 3c, mais la couche de mousse souple de mélamine -notamment stabilisée- 7 est pourvue, sur une partie de sa surface inférieure, d'un alvéolage 7a formé d'une pluralité de protubérances séparées les unes des autres par des renfoncements.

Cet alvéolage 7a, outre le fait de permettre un allègement supplémentaire, permet, par un choix approprié de la forme des protubérances et/ou renfoncements et de leur répartition, d'obtenir la souplesse souhaitée pour la matelassure.

Selon l'invention, de très nombreuses variantes peuvent être envisagées. Les protubérances s'étendent en saillie d'au moins une face de la mousse souple de mélamine -notamment stabilisée- 7, de préférence globalement perpendiculaires à ladite face, et globalement parallèles les unes aux autres. Elles peuvent présenter des formes plus ou moins coniques et pointues, de tailles variables, des bases plus ou moins larges, une répartition plus ou moins dense... Il en va de même des renfoncements entre les protubérances.

Selon une autre variante de réalisation, représentée à la figure 3e, la structure de matelassure peut inclure divers inserts 10a, 10b et 10c qui peuvent être positionnés, à l'intérieur de l'épaisseur définie par la couche de mousse souple de mélamine -notamment stabilisée- 7 en des zones particulières de la matelassure. Ces inserts peuvent, par exemple, permettre d'obtenir en ces zones, des propriétés mécaniques modifiées -notamment de résilience, d'élasticité ou de portance-. De tels inserts peuvent s'étendre sur toute l'épaisseur de la matelassure 2c ou seulement sur une partie de cette épaisseur. Ils peuvent être formés de ressorts, de vésicules de fluides (air, gels, liquides...) ou d'un matériau tel qu'une mousse de polyuréthanne, de néoprène, de silicone, de polyéthylène, ou une combinaison de tels matériaux. Quoiqu'il en soit, les propriétés de confort de la matelassure proviennent pour l'essentiel de chaque portion de mousse souple de mélamine, qui est adaptée, notamment en ce qui concerne sa forme et sa position dans la matelassure, dans ce but.

## Revendications

1. - Matelassure, **caractérisée en ce qu'**elle comprend au moins une portion de mousse formée d'une mousse de mélamine de dureté, mesurée en indentation selon la norme ISO 2439 B, inférieure à 300 N pour un enfoncement de 40 %, et dite mousse souple de mélamine (7).

2. - Matelassure selon la revendication 1, **caractérisée en ce que** ladite mousse souple de mélamine est une mousse souple de mélamine (7) de dureté stabilisée à moins de 300 N pour un enfoncement de 40 % en indentation, dite mousse souple de mélamine stabilisée.

3. - Matelassure selon l'une des revendications 1 ou 2, **caractérisée en ce que** ladite mousse souple de mélamine (7) présente une dureté de l'ordre de 160 à 200 N pour un enfoncement de 40 % en indentation.

4. - Matelassure selon l'une des revendications 1 à 3, **caractérisée en ce que** ladite portion de mousse souple de mélamine (7) présente une dureté de l'ordre de 180 N pour un enfoncement de 40 % en indentation.

5. - Matelassure selon l'une des revendications 1 à 4, **caractérisée en ce qu'**au moins 50 % de son volume est formé d'au moins une portion de mousse souple de mélamine (7).

6. - Matelassure selon l'une des revendications 1 à 5, **caractérisée en ce que** la mousse souple de mélamine (7) présente une densité inférieure à 20 kg.m⁻³.

7. - Matelassure selon la revendication 6, **caractérisée en ce que** la mousse souple de mélamine (7) présente une densité comprise entre 8 et 12 kg.m⁻³.

8. - Matelassure selon l'une des revendications 1 à 7, **caractérisée en ce que** chaque portion réalisée en mousse souple de mélamine (7) est au moins en partie protégée par un matériau adapté pour présenter une résistance au déchirement supérieure à celle de la mousse souple de mélamine (7).

9. - Matelassure selon l'une des revendications 1 à 8, **caractérisée en ce qu'**au moins une couche constitutive de la matelassure est réalisée en une mousse souple de mélamine (7).

10. - Matelassure selon l'une des revendications 1 à 9, **caractérisée en ce qu'**elle comprend au moins deux couches distinctes superposées et assemblées, dont au moins une couche, dite couche de matériau distinct (8, 9), est réalisée en un matériau autre qu'une mousse souple de mélamine (7).

11. - Matelassure selon l'une des revendications 1 à 10, **caractérisée en ce que** la (les) couche(s) réalisée(s) en mousse souple de mélamine (7) représente(nt) au moins 50 % de l'épaisseur de ladite matelassure.

12. - Matelassure selon l'une des revendications 10 ou 11, **caractérisée en ce que** la (les) couche(s) de matériau distinct (8, 9) présente(nt) une (des) densité(s) supérieure(s) à 20 kg.m⁻³.

13. - Matelassure selon l'une des revendications 9 à 12, **caractérisée en ce qu'**au moins une des couches de ladite matelassure présente un alvéolage (7a) sur au moins une partie d'une des faces de ladite couche.

14. - Matelassure selon l'une des revendications 10 à 13, **caractérisée en ce qu'**elle comprend au moins une couche de matériau distinct (8), dite couche de confort, s'étendant sur une couche de mousse souple de mélamine (7) du côté de l'occupant.

15. - Matelassure selon la revendication 14, **caractérisée en ce que** la couche de confort (8) est réalisée en un matériau choisi parmi: une mousse de polyuréthanne, un matériau viscoélastique.

16. - Matelassure selon l'une des revendications 10 à 15, **caractérisée en ce qu'**elle comprend au moins une couche de matériau distinct (9) dite couche sous-jacente (a), s'étendant du côté de la couche de mousse souple de mélamine (7) opposée à l'occupant, et destinée à ajuster la portance globale de ladite matelassure.

17. - Matelassure selon l'une des revendications 1 à 16, **caractérisée en ce qu'**elle comprend au moins un insert (10a, 10b, 10c) s'étendant sur au moins une partie de l'épaisseur de la matelassure destinée à modifier ponctuellement ses propriétés mécaniques.

18. - Matelassure selon l'une des revendications 1 à 17, **caractérisée en ce qu'**elle présente un revêtement superficiel (8).

19. - Matelassure selon la revendication 18, **caractérisée en ce que** le revêtement superficiel (8) choisi parmi : un textile, du cuir, tout autre revêtement décor.

20. - Matelassure selon les revendications 18 ou 19, **caractérisée en ce que** le revêtement superficiel est ignifugé (8).

21. - Garniture de siège (2a, 3a, 4a) **caractérisée en ce qu'**elle comprend au moins une matelassure selon l'une des revendications 1 à 20 couverte au moins en partie d'une housse souple de protection et/ou de décor (2b, 3b, 4b).

22. - Siège (1) **caractérisé en ce qu'**il comprend au moins une matelassure selon l'une des revendications 1 à 20.

23. - Siège (1) **caractérisé en ce qu'**il comprend au moins une garniture selon la revendication 21.

24. - Utilisation d'une mousse souple de mélamine (7) -notamment stabilisée- de dureté, mesurée en indentation selon la norme ISO 2439 B, inférieur à 300 N pour un enfoncement de 40 % en indentation, à titre de mousse souple de rembourrage destinée à entrer dans la composition d'une matelassure.

25. - Utilisation d'une mousse souple de mélamine (7) selon la revendication 24, **caractérisée en ce que** ladite mousse souple de mélamine (7) présente une densité inférieure à 20 kg.m⁻³.

26. - Utilisation d'une mousse souple de mélamine (7) selon la revendication 24 ou 25, **caractérisée en ce que** la mousse souple de mélamine (7) présente une densité comprise entre 8 et 12 kg.m⁻³.

27. - Utilisation d'une mousse souple de mélamine (7) selon l'une des revendications 24 à 26, **caractérisée en ce qu'**elle représente au moins 50 % en volume de ladite matelassure.

## Claims

1. Cushioning, **characterized in that** it comprises at least one portion of foam formed of a melamine foam with a hardness, measured in indentation, according to ISO 2439 B Standard below 300 N for 40 % compression ratio and called flexible melamine foam (7).

2. Cushioning according to claim 1, **characterized in that** the said flexible melamine foam is a flexible melamine foam (7) with a hardness stabilised to less than 300 N for 40 % compression ratio, called stabilised flexible melamine foam.

3. Cushioning according to either of claims 1 or 2, **characterized in that** the said flexible melamine foam (7) has a hardness of the order of 160 to 200 N for 40 % compression ratio.

4. Cushioning according to one of claims 1 to 3, **characterized in that** the said portion of flexible melamine foam (7) has a hardness of the order of 180 N for 40 % compression ratio.

5. Cushioning according to one of claims 1 to 4, **characterized in that** at least 50 % of its volume is formed of at least one portion of flexible melamine foam (7).

6. Cushioning according to one of claims 1 to 5, **characterized in that** the flexible melamine foam (7) has a density below 20 kg.m⁻³.

7. Cushioning according to claim 6, **characterized in that** the flexible melamine foam (7) has a density of between 8 and 12 kg.m⁻³.

8. Cushioning according to one of claims 1 to 7, **characterized in that** each portion made of flexible melamine foam (7) is at least partly protected by a material adapted so as to have a tear resistance greater than that of the flexible melamine foam (7).

9. Cushioning according to one of claims 1 to 8, **characterized in that** at least one layer constituting the cushioning is made of a flexible melamine foam (7).

10. Cushioning according to one of claims 1 to 9, **characterized in that** it comprises at least two distinct superimposed and assembled layers, of which at least one layer, referred to as the layer of distinct material (8, 9), is made of a material other than a flexible melamine foam (7).

11. Cushioning according to one of claims 1 to 10, **characterized in that** the layer(s) made of flexible melamine foam (7) represent(s) at least 50 % of the thickness of the said cushioning.

12. Cushioning according to either claim 10 or 11, **characterized in that** the layer(s) of distinct material (8, 9) has/have a density or densities greater than 20 kg.m⁻³.

13. Cushioning according to one of claims 9 to 12, **characterized in that** at least one of the layers of the said cushioning has a pocketed structure (7a) over at least part of one of the faces of the said layer.

14. Cushioning according to one of claims 10 to 13, **characterized in that** it includes at least one layer of distinct material (8), referred to as the comfort layer, extending over one layer of flexible melamine foam (7) on the side of the occupant.

15. Cushioning according to claim 14, **characterized in that** the comfort layer (8) is made of a material chosen from a polyurethane foam or a visco-elastic material.

16. Cushioning according to one of claims 10 to 15, **characterized in that** it includes at least one layer of distinct material (9), referred to as the subjacent layer (a), extending from the side of the layer of flexible melamine foam (7) opposite the occupant, and designed to adjust the overall supporting ability of the said cushioning.

17. Cushioning according to one of claims 1 to 16, **characterized in that** it includes at least one insert (10a, 10b, 10c) extending over at least part of the thickness of the cushioning designed to modify its mechanical properties as required.

18. Cushioning according to one of claims 1 to 17, **characterized in that** it has a surface covering (8).

19. Cushioning according to claim 18, **characterized in that** the surface covering (8) is chosen from a textile, leather or any other decorative covering.

20. Cushioning according to claim 18 or 19, **characterized in that** the surface covering is fire-proofed (8).

21. Seat upholstery (2a, 3a, 4a) **characterized in that** it includes at least one item of cushioning according to one of claims 1 to 20 at least partly covered with a flexible protective and/or decorative cover (2b, 3b, 4b).

22. Seat (1) **characterized in that** it includes at least one item of cushioning according to one of claims 1 to 20.

23. Seat (1) **characterized in that** it includes at least one item of upholstery according to claim 21.

24. Use of a flexible (in particular stabilised) melamine foam (7) with a hardness, measured in indentation according to ISO 2439 B Standard, of below 300 N for an indentation of 40 %, as a flexible padding foam designed to enter into the composition of an item of cushioning.

25. Use of a flexible melamine foam (7) according to claim 24, **characterized in that** the said flexible melamine foam (7) has a density below 20 kg.m⁻³.

26. Use of a flexible melamine foam (7) according to claim 24 or 25, **characterized in that** the flexible melamine foam (7) has a density of between 8 and 12 kg.m⁻³.

27. Use of a flexible melamine foam (7) according to one of claims 24 to 26, **characterized in that** it represents at least 50 % by volume of the said cushioning.

## Patentansprüche

1. Polsterung, **dadurch gekennzeichnet, dass** sie wenigstens einen Schaumstoffteil aus einem Melaminschaumstoff mit einer Härte, nach Eindruck gemäß der Norm ISO 2439 B gemessen, von weniger als 300 N für eine Vertiefung von 40% und den genannten flexiblen Melaminschaumstoff (7) aufweist.

2. Polsterung nach Anspruch 1, **dadurch gekennzeichnet, dass** der genannte flexible Melaminschaumstoff ein flexibler Melaminschaumstoff (7) mit einer Härte ist, die auf weniger als 300 N für eine Eindruckvertiefung von 40% stabilisiert ist, stabilisierter flexibler Melaminschaumstoff genannt.

3. Polsterung nach Anspruch 1 oder 2, **dadurch gekennzeichnet, dass** der genannte flexible Melaminschaumstoff (7) eine Härte von etwa 160 bis 200 N für eine Eindruckvertiefung von 40% hat.

4. Polsterung nach einem der Ansprüche 1 bis 3, **dadurch gekennzeichnet, dass** der genannte Teil aus flexiblem Melaminschaumstoff (7) eine Härte von etwa 180 N für eine Eindruckvertiefung von 40% hat.

5. Polsterung nach einem der Ansprüche 1 bis 4, **dadurch gekennzeichnet, dass** wenigstens 50% ihres Volumens aus wenigstens einem Teil von flexiblem Melaminschaumstoff (7) gebildet ist.

6. Polsterung nach einem der Ansprüche 1 bis 5, **dadurch gekennzeichnet, dass** der flexible Melaminschaumstoff (7) eine Dichte von weniger als 20 kg.m⁻³ hat.

7. Polsterung nach Anspruch 6, **dadurch gekennzeichnet, dass** der flexible Melaminschaumstoff (7) eine Dichte zwischen 8 und 12 kg.m⁻³ hat.

8. Polsterung nach einem der Ansprüche 1 bis 7, **dadurch gekennzeichnet, dass** jeder Teil aus flexiblem Melaminschaumstoff (7) wenigstens teilweise durch ein Material geschützt ist, das so gestaltet ist, dass es eine Reißfestigkeit hat, die größer ist als die des flexiblen Melaminschaumstoffs (7).

9. Polsterung nach einem der Ansprüche 1 bis 8, **dadurch gekennzeichnet, dass** wenigstens eine die Polsterung bildende Lage aus einem flexiblen Melaminschaumstoff (7) besteht.

10. Polsterung nach einem der Ansprüche 1 bis 9, **dadurch gekennzeichnet, dass** sie wenigstens zwei separate übereinander liegende und aneinander gefügte Lagen hat, von denen wenigstens eine Lage, separate Materiallage (8, 9) genannt, aus einem anderen Material als einem flexiblen Melaminschaumstoff (7) gebildet ist.

11. Polsterung nach einem der Ansprüche 1 bis 10, **dadurch gekennzeichnet, dass** die Lage(n) aus flexiblem Melaminschaumstoff (7) wenigstens 50% der Dicke der genannten Polsterung ausmacht/ausmachen.

12. Polsterung nach Anspruch 10 oder 11, **dadurch gekennzeichnet, dass** die separate(n) Materiallage(n) (8, 9) (eine) Dichte(n) von mehr als 20 kg.m⁻³ hat/haben.

13. Polsterung nach einem der Ansprüche 9 bis 12, **dadurch gekennzeichnet, dass** wenigstens eine der Lagen der genannten Polsterung eine Zellenstruktur (7a) über wenigstens einen Teil von wenigstens einer der Flächen der genannten Lage hat.

14. Polsterung nach einem der Ansprüche 10 bis 13, **dadurch gekennzeichnet, dass** sie wenigstens eine Lage aus separatem Material (8) beinhaltet, Komfortlage genannt, die sich über eine Lage aus flexiblem Melaminschaumstoff (7) auf der Seite der darauf sitzenden Person erstreckt.

15. Polsterung nach Anspruch 14, **dadurch gekennzeichnet, dass** die Komfortlage (8) aus einem Material besteht, das aus einem Polyurethanschaumstoff oder einem viskoelastischen Material ausgewählt ist.

16. Polsterung nach einem der Ansprüche 10 bis 15, **dadurch gekennzeichnet, dass** sie wenigstens eine separate Materiallage (9) aufweist, Unterlage (a) genannt, die sich auf der Seite der Lage aus flexiblem Melaminschaumstoff (7) gegenüber der darauf sitzenden Person erstreckt und so ausgelegt ist, dass sie die Gesamttragfähigkeit der genannten Polsterung justiert.

17. Polsterung nach einem der Ansprüche 1 bis 16, **dadurch gekennzeichnet, dass** sie wenigstens einen Einsatz (10a, 10b, 10c) aufweist, der über wenigstens einen Teil der Dicke der Polsterung verläuft, um ihre mechanischen Eigenschaften örtlich zu verändern.

18. Polsterung nach einem der Ansprüche 1 bis 17, **dadurch gekennzeichnet, dass** sie einen Oberflächenbezug (8) hat.

19. Polsterung nach Anspruch 18, **dadurch gekennzeichnet, dass** der Oberflächenbezug (8) aus einem Textil, aus Leder oder einem sonstigen dekorativen Bezug ausgewählt ist.

20. Polsterung nach Anspruch 18 oder 19, **dadurch gekennzeichnet, dass** der Oberflächenbezug flammwidrig (8) ist.

21. Sitzgarnitur (2a, 3a, 4a), **dadurch gekennzeichnet, dass** sie wenigstens eine Polsterung nach einem der Ansprüche 1 bis 20 aufweist, die wenigstens teilweise mit einem flexiblen Schutz- und/oder Dekorüberzug (2b, 3b, 4b) bedeckt ist.

22. Sitz (1), **dadurch gekennzeichnet, dass** er wenigstens eine Polsterung nach einem der Ansprüche 1 bis 20 aufweist.

23. Sitz (1), **dadurch gekennzeichnet, dass** er wenigstens eine Garnitur nach Anspruch 21 aufweist.

24. Verwendung eines flexiblen - insbesondere stabilisierten - Melaminschaumstoffs (7) mit einer Härte, nach Eindruck gemäß der Norm ISO 2439 B gemessen, von weniger als 300 N für eine Eindruckvertiefung von 40% als flexiblen Polsterschaumstoff, der so ausgelegt ist, dass er in die Zusammensetzung einer Polsterung integriert wird.

25. Verwendung eines flexiblen Melaminschaumstoffs (7) nach Anspruch 24, **dadurch gekennzeichnet, dass** der genannte flexible Melaminschaumstoff (7) eine Dichte von weniger als 20 kg.m⁻³ hat.

26. Verwendung eines flexiblen Melaminschaumstoffs (7) nach Anspruch 24 oder 25, **dadurch gekennzeichnet, dass** der flexible Melaminschaumstoff (7) eine Dichte zwischen 8 und 12 kg.m⁻³ hat.

27. Verwendung eines flexiblen Melaminschaumstoffs (7) nach einem der Ansprüche 24 bis 26, **dadurch gekennzeichnet, dass** er wenigstens 50 Vol.-% der genannten Polsterung ausmacht.
